(19) Europäisches Patentamt
European Patent Office
Office européen des brevets

(11) Publication number: **0 538 553 B1**

# (12) EUROPEAN PATENT SPECIFICATION

(45) Date of publication of patent specification: **03.05.95**

(51) Int. Cl.6: **C09K 19/54**, G02F 1/1333

(21) Application number: **92109214.4**

(22) Date of filing: **01.06.92**

## (54) Copolymerizable initiator for improved polymer dispersed liquid crystal films.

(30) Priority: **23.10.91 US 780591**

(43) Date of publication of application:
**28.04.93 Bulletin 93/17**

(45) Publication of the grant of the patent:
**03.05.95 Bulletin 95/18**

(84) Designated Contracting States:
**DE FR GB IT NL**

(56) References cited:
**EP-A- 0 217 205**
**WO-A-89/06264**
**WO-A-89/06371**
**GB-A- 885 986**
**US-A- 4 971 719**

(73) Proprietor: **Hughes Aircraft Company**
**7200 Hughes Terrace**
**P.O. Box 45066**
**Los Angeles, California 90045-0066 (US)**

(72) Inventor: **Margerum, David J.**
**5433 Rozie Avenue**
**Woodland Hills, CA 91367 (US)**
Inventor: **Yamagishi, Frederick G.**
**247 Mesa Avenue**
**Newbury Park, CA 91320 (US)**

(74) Representative: **KUHNEN, WACKER & PARTNER**
**Patent- und Rechtsanwaltsbüro,**
**Alois-Steineckerstrasse 22**
**D-85354 Freising (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

### BACKGROUND OF THE INVENTION

### 1. Field of the Invention

The present invention is directed to liquid crystal (LC) light control films and displays, and, more particularly, to an improved method of forming polymer dispersed liquid crystal films for use in such light control films and displays.

### 2. Description of Related Art

Liquid crystals contain rod-like molecules of particular structures which exist in an oriented arrangement wherein many molecules are aligned with respect to each other. In a basic liquid crystal cell used in display devices, liquid crystals are placed between two sheets of a transparent conductor material, so that the liquid crystals are oriented in a selected manner. Upon application of an electric field, the liquid crystal molecules reorient in another manner. This reorientation is used to control the polarization direction or phase of polarized light passed through the cell, thereby controlling the transmission through an analyzer. In such an approach, a continuous thin film of the liquid crystal is sandwiched between the electrodes.

In another approach not requiring polarizers, the liquid crystal material is dispersed throughout a matrix of a transparent solid to form a composite material, called "polymer dispersed liquid crystal" (PDLC) material. The PDLC films can have various types of morphologies, depending upon the materials used and the method of PDLC formation. In general, the PDLC films can contain the liquid crystal dispersed as droplets within a polymer matrix to give a droplet morphology (also known as a "Swiss cheese" morphology), or can contain the liquid crystal held as part of a polymer net-work to give a network morphology (also known as a "polymer ball" morphology, or a gel morphology), as described in U.S. Patent 4,891,152. The PDLC droplet morphology is advantageous because the liquid crystal droplets are surrounded by polymer, which tends to seal them against leakage and intrusion of outside contaminants. The network morphology is advantageous because more liquid crystal is separated from the polymer and its cells can be operated at lower voltages.

Typically, the ordinary index of the liquid crystal material and the isotropic index of the transparent solid are selected to have matched indices of refraction in either the "on" or "off" state, that is, when an electrical field is or is not applied to the PDLC material, respectively. For example, in the droplet morphology, the "off" state, that is, when there is no applied electric field to the PDLC material, there generally exists an index mismatch and the film scatters light and appears opaque. In the "on" state, the LC in the droplets is realigned to match the polymer refractive index and clear the PDLC film. PDLC network gels, on the other hand, can be prepared with a transparent "off" state in which the LC and the polymer network are uniformly aligned by the cell surfaces. In this morphology, the PDLC gel becomes scattering in the "on" state due to local LC realignment differences from competing effects of the applied field and the polymer network. Thus, the electro-optical switching of PDLC films and displays prepared from PDLC films does not require the use of polarizers.

In the PDLC droplet morphology, the droplets of liquid crystal are typically about 0.2 µm or greater in size, have a distribution of sizes, are irregular spheres or ellipsoids in shape, and may be dispersed throughout the solid in a somewhat irregular distribution. Nevertheless, the solid matrix with the encapsulated droplets of liquid crystal experiences an overall transition in optical transparency when an electric field is applied, and therefore can be used in displays.

U.S. Patents 4,891,152, 4,938,568, and 4,944,576, all assigned to the same assignee as the present application, are examples of references disclosing various improvements relating to PDLCs. As described in those patents, PDLC films are prepared by dissolving liquid crystal molecules in an uncured monomer resin, and then curing or polymerizing the resin so that the LC phase separates (e.g., as droplets) more or less uniformly dispersed throughout the matrix. PDLCs can be prepared by a photopolymerization process of exposure to ultraviolet light, employing a photoinitiator.

However, a problem associated with the use of conventional photoinitiators is contamination of the LC phase in the PDLC. That is, some of the photoinitiator separates into the LC phase (e.g., droplets) during polymerization. This is due to the greater solubility of conventional photoinitiators in the mobile LC phase than in the cured solid phase of the now-formed polymer, or solid phase.

Such contamination results in a limited temperature range, a comparatively low clearpoint, and could cause a comparatively high crystallization temperature for the separated LC phase (e.g., droplets). For

example, the clear-point of the commercial liquid crystal material BDH-E9 is depressed by about 42% when it is contaminated by 11.2% of 2,2-diethoxyacetophenone (DEAP), while the clearpoint of the commercial liquid crystal material BDH-E7 is depressed by about 11% when it is contaminated by 3% of benzophenone. Contamination of the LC phase of PDLC films by these traditional photoinitiators reduces the useful temperature range of resulting electro-optic devices. Further, the PDLC evidences device photoinstability (to exposure in the UV/blue region) because initiator trapped in the LC droplets causes degradation of the LC droplets and the PDLC film.

A need remains for forming polymer dispersed liquid crystal films in which the photoinitiator is prevented from substantially contaminating the separated liquid crystal phase and contributing to the photoinstability of the film. The present invention fulfills this need.

## SUMMARY OF THE INVENTION

In accordance with the invention, polymer dispersed liquid crystal films are prepared by UV curing of monomer/LC solutions with a copolymerizable photoinitiator instead of a traditional photoinitiator. Use of copolymerizable photoinitiators results in reduced initiator contamination of the liquid crystal which has phase-separated in PDLC films as droplets or as a part of a network morphology, and improves the electro-optical characteristics as well as the photostability of the films.

Much less of the copolymerizable initiator separates out in the liquid crystal and much more is trapped through chemical reaction in the polymer matrix of the PDLC than is the case with traditional photoinitiators. Because the separated liquid crystal in the PDLC is less contaminated by initiator, this provides the following advantages: (1) the LC phase has a wider temperature range, a higher clear-point, and a lower crystallization temperature than PDLC films prepared with conventional photoinitiators; and (2) the PDLC has increased device photostability because initiator trapped in the more rigid polymer matrix causes less PDLC degradation than initiator trapped in the fluid LC phase.

Use of the method of the invention thus enables the formation of PDLC films with a wider nematic range and increased photostability, both of which are needed for display, solar control, and light-control optical applications.

## BRIEF DESCRIPTION OF THE DRAWINGS

FIG. 1, on coordinates of temperature and concentration, is a plot showing the effect on the clearpoint of the LC BDH-E9 as a function of dissolved photoinitiator, DEAP;

FIG. 2, on coordinates of temperature and concentration, is a plot showing the effect on clearpoint of the LC BDH-E7 as a function of dissolved photoinitiator, benzophenone;

FIG. 3, on coordinates of temperature and concentration, is a plot showing the effect on clearpoint of the LC phase of PDLCs made with BDH-E7 as a function of the concentration of the photoinitiators DEAP, benzophenone, and a photoinitiator (II) of the invention; and

FIG. 4, on coordinates of temperature and concentration, is a plot showing the effect on clearpoint of the LC phase of PDLCs made with BDH-E7 as a function of the ratio of mercaptan group concentration to carbon-carbon double bond concentration (SH/C = C).

## DESCRIPTION OF THE PREFERRED EMBODIMENTS

The problem of the decrease in clearpoint is clearly apparent in FIGS. 1 and 2. FIG. 1 is a plot of the average clearpoint of the commercial liquid crystal material BDH-E9 as a function of varying amounts of the traditional photoinitiator 2,2-diethoxyacetophenone (DEAP) dissolved in the LC. In this case, the clearpoint of the liquid crystal is depressed by about 42% when it is contaminated by 11.2% of DEAP.

FIG. 2 is a plot of the average clearpoint of the commercial liquid crystal material BDH-E7 as a function of varying amounts of the traditional photoinitiator benzophenone dissolved in the LC. In this case, the clearpoint of the liquid crystal is depressed by about 11% when it is contaminated by 3% of benzophenone.

From these data, it can be concluded that excess traditional photoinitiator will be dissolved in the LC phase of PDLC films, which results in contaminating the LC phase and thereby reducing the useful temperature range of resulting electro-optic devices.

In the practice of the invention, any liquid crystal material can be used to prepare PDLC films, so long as it is soluble in the monomer chosen and is sufficiently less soluble in the polymer formed from the monomer to obtain suitable phase separation from the polymer that is formed. Nematic LCs of positive dielectric anisotropy such as cyanobiphenyl liquid crystals are preferred, but the invention is not so limited.

For example, LCs with biphenyl, pyrimidine, phenylcyclohexane, terphenyl, tolane, diphenyldiacetylene, and phenylbenzoate structures with cyano, fluoro, chloro, alkyl, and alkoxy end groups, and combinations thereof, can also be used as liquid crystal components and mixtures. The nematic liquid crystal mixtures used in these PDLCs can have a dielectric anisotropy that is positive, or negative, or of the cross-over type, and may also contain chiral additives.

The monomer with which the liquid crystal is mixed, and which is photopolymerized, contains multifunctional materials (such as multifunctional acrylates or methacrylates, multifunctional urethanes, etc., and mixtures thereof). As used herein, the term "multifunctional" refers to a molecule with more than one reactive site for chemical reaction. In the case of a monomer, it refers to more than one polymerizable moiety (e.g., carbon-carbon double bond).

Examples of multifunctional monomers suitably employed in the practice of the invention include bis(1-acryloxy-2-hydroxypropyl)phthalate, bisphenol-A diacrylate, 1,3-butanediol diacrylate, 1,4-butanediol diacrylate, diethylene glycol diacrylate, dipentaerythritol monohydroxypentaacrylate, ethylene diacrylate, glycerol triethoxy triacrylate, glycerol propoxy triacrylate, 1,6-hexamethylene diacrylate, 3-methylpentanediol diacrylate, neopentyl glycol diacrylate, pentaerythritol tetraacrylate, pentaerythritol triacrylate, *p*-phenylene diacrylate, poly(ethylene glycol 400 diacrylate), 1,3-propanediol diacrylate, tetraethylene glycol diacrylate, thiodiethyltrimethylolpropanetriethoxytriacrylate, 1,1,1-trimethylolpropane triacrylate, tripropylene glycol diacrylate, tris(2-acryloxyethyl)isocyanurate, ethoxylated bis-phenol-A diacrylate, tris(acryloxy-2-hydroxypropyl)ether,the diurethane adduct of isophorone diisocyanate with allyl alcohol, the diurethane adduct of isophorone diisocyanate with trimethylolpropane diallyl ether, the diurethane adduct of isophorone diisocyanate with allyl alcohol and trimethylolpropane diallyl ether, the diurethane adduct of toluene diisocyanate with allyl alcohol, the diurethane adduct of toluene diisocyanate with trimethylolpropane diallyl ether, the diurethane adduct of toluene diisocyanate with trimethylolpropane diallyl ether and allyl ether, and mixtures thereof. Preferably, the multifunctional monomer is selected from the group consisting of the diurethane adduct of isophorone diisocyanate with allyl alcohol, the urethane adduct of isophorone diisocyanate with trimethylolpropane diallyl ether, the diurethane adduct of isophorone diisocyanate with allyl alcohol and trimethylolpropane diallyl ether, the diurethane adduct of toluene diisocyanate with allyl alcohol, the diurethane adduct of toluene diisocyanate with trimethylolpropane diallyl ether, the diurethane adduct of toluene diisocyanate with trimethylolpropane diallyl ether and allyl ether, and mixtures thereof.

For improved droplet morphology, the monomer is mixed with a multifunctional mercaptan, as described in the above-referenced U.S. Patent 4,891,152. Since a multifunctional mercaptan refers to a compound that possesses more than one mercaptan group, the polymerization of a multifunctional monomer and a multifunctional mercaptan results in a highly crosslinked matrix. Preferably, the ratio of mercaptan groups to double bonds in the functionalities (S-H/C = C) ranges from about 1.0 to 2.0, and most preferably from about 1.5 to 1.9 for the droplet morphology.

Examples of multifunctional mercaptans suitably employed in the practice of the invention include 2,2'-dimercaptodiethyl ether, glycol dimercaptoacetate (also termed ethylene bis(3-mercaptoproprionate)), glycol dimercaptoproprionate, pentaerythritol tetra(3-mercaptopropionate, pentaerythritol tetrathioglycolate, trimethylolethane tri(3-mercaptopropionate), trimethylethane trithioglycolate, trimethylolpropane tri(3-mercaptopropionate), trimethylolpropane trithioglycolate, dipentaerythritol hexa(3-mercaptopropionate), polyethylene glycol dimercaptoacetate, polyethylene glycol di(3-mercaptopropionate), and mixtures thereof. Preferably, the multifunctional mercaptan is selected from the group consisting of pentaerythritol tetramercaptopropionate, trimethylolpropane tri(3-mercaptopropionate), and mixtures thereof.

The liquid crystal material is present in an amount from about 20 to 99% of the total volume of the solution of the liquid crystal material, photoinitiator, and monomer (before polymerization). The LC material is preferably present in an amount of about 30 to 70% for the droplet morphology and in an amount of about 70 to 99% for the network-gel morphology. (The droplet and network-gel morphologies are discussed in greater detail below.) The volume fraction of liquid crystal material is established by the amount mixed with the monomer(s) and photoinitiator, prior to polymerization.

In accordance with the invention, a copolymerizable photoinitiator is employed in the polymerization process. In general, the copolymerizable initiator has a structure in which one part of the molecule is photochemically sensitive to ultraviolet light with the resultant photogeneration of free radicals, while another part of the molecule has a polymerizable group which can polymerize with the rest of the monomer system being used. For example, the following type of benzophenone acrylate type of structure could be used, except that their lack of stability makes them inconvenient to handle:

*p*-R-Ph-CO-Ph-OCOCH = $CH_2$,

where R is H, an alkyl, or an alkoxy group and Ph is phenyl.

The copolymerizable photoinitiator preferably has the general structure I:

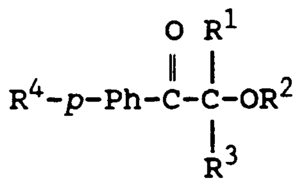

I

where

Ph = phenyl,

$R^1$ and $R^3$ are each H, $C_1$-$C_6$ alkyl or phenyl,

$R^2$ is H, $C_1$-$C_6$ alkyl, $C_1$-$C_6$ alkanoyl, or the group Z,

$R^4$ is H, halogen, $C_1$-$C_{12}$ alkyl, $C_1$-$C_{12}$ alkoxy, $C_1$-$C_{12}$ alkylthio or the group $-X[(CH_2-CH_2-O)_n-Z]_m$, and

X is O, S, or N,

n is an integer from 0 to 4,

m is the integer 1 for X = O or the integer 1 or 2 for X = N,

Z is the group -CO-CR = CR'R'',

with R, R', R'' each being H or $CH_3$, and always at least one of the $R^2$ or $R^4$ groups containing the group Z.

Such compounds are disclosed and claimed in U.S. Patent 4,922,004 as copolymerizable photoinitiators. Most preferably, the compounds II or III

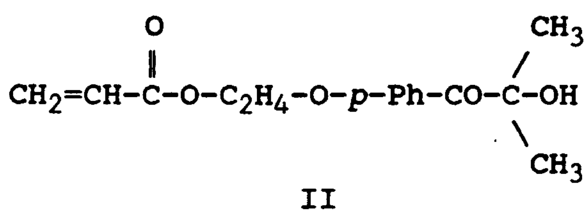

II

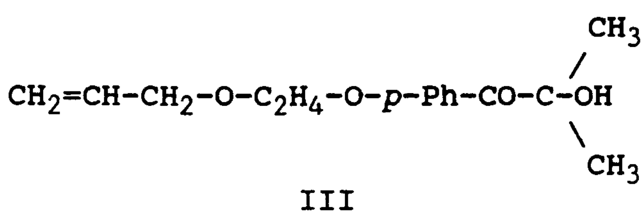

III

are employed in the formation of PDLC films. Compound II is a derivative of 2-hydroxy-2-methyl-1-phenylpropane-1-one, known as 4-(2-acryloyloxyethoxy)phenyl 2-hydroxy-2-propyl ketone. Compound III is another derivative, known as 4-(2-allyloxyethoxy)phenyl 2-hydroxy-2-propyl ketone.

Use of such photoinitiators is typically in the amount of about 0.1 to 10 wt% of the monomer/liquid crystal solution, although more or less may be used. Preferably, the concentration of the photoinitiator is about 0.5 to 5 wt%.

The monomer/liquid crystal/photoinitiator solution is usually polymerized at room temperature. The solution may be heated somewhat, up to about 60 °C (or about 10 °C below the clearpoint of the liquid crystal), if the monomer and liquid crystal are not totally soluble at room temperature with higher concentrations of LC.

The polymerization is normally essentially complete within about 0.1 to 10 minutes, depending upon the UV light intensity and the monomer, liquid crystal, initiator system being used. Longer UV exposures, on the order of about 10 to 200 minutes, are used for very low monomer concentrations, such as in network-gel

type PDLCs.

Because the photoinitiator is copolymerizable, it is incorporated, or trapped, by chemical reaction in the polymer. As a result, less of the photoinitiator is found in the liquid crystal phase than is found with conventional photoinitiators.

As described above, the depression of the clearpoint is a good indication of contamination of the LC phase in the PDLC films caused by dissolved photoinitiator. FIG. 3 illustrates the beneficial effect of using the copolymerizable photoinitiator II (Curve **10**) over prior art photoinitiators, such as DEAP (Curve **12**) or benzophenone (Curve **14**). These data were derived from a PDLC cell composed of the commercial liquid crystal material BDH-E7 and of a Hughes Aircraft Co. proprietary monomer mixture, called herein HRL-URC, made from multifunctional vinylurethanes and the multifunctional mercaptan trimethylolpropane tri-3-mercaptopropionate (TMPTMP). The ratio SH/C=C was 1.5 in all cases. Use of the copolymerizable photoinitiator II in this system showed a decrease in the clearing point of the LC droplets of only about 1% over a concentration range of 3 to 9.34% by weight. On the other hand, use of the prior art photoinitiators DEAP and benzophenone resulted in decreases of the clearpoint of the LC droplets of 10% and 9%, respectively, over a smaller concentration range.

Similar results can be seen in FIG. 4, using the same proprietary monomer components used to obtain the data for FIG. 3, except the weight percent of the photoinitiators was kept at a constant 3%, and the concentration of TMPTMP was varied to change the SH/C=C ratio. Higher clearpoints were observed throughout the ratio range of 0.87 to 1.98 for the copolymerizable photoinitiator II than with DEAP and benzophenone.

The teachings of U.S. Patent 4,922,004 point out that copolymerizable photoinitiators such as II can be incorporated within the polymer matrix through chemical reaction, thus reducing its tendency to migrate throughout the bulk, causing degradation of the physical properties of the coating. Thus, higher quality and longer-lasting polymer films, particularly for paints and protective coatings, can be expected by using copolymerizable photoinitiators such as II, than those coatings using traditional photoinitiators. It is not apparent from these teachings, however, that the close retention of bulk properties of a mobile phase in a phase-separated system such as a PDLC film can be expected. The dramatic effect of nominal initiator contamination of the LC phase is PDLC films, as shown in FIG. 3, by using the copolymerizable photoinitiator II to affect the phase separation could not have been predicted from the teachings in U.S. Patent 4,922,004.

PDLC films prepared in accordance with the invention have a wider nematic range and increased photostability and resistivity, as compared with films prepared by traditional photoinitiators.

The effect of the use of the copolymerizable photoinitiator II in accordance with the invention on clearpoint is demonstrated in Tables I and II, below. The liquid crystal used was a proprietary Hughes Aircraft composition comprising a mixture of cyanobiphenyl, cyanophenylcyclohexane, and cyanoterphenyl components known as HRL-PD50.

Table I shows the effect of various concentrations of HRL-PD50 on the clearpoint when contained in a PDLC film, using compound II as the photoinitiator. In this polymer/liquid crystal composite, the starting monomer was a derivative of isophorone diisocyanate with allyl alcohol and the diallyl ether of trimethylol propane, and is designated HRL-URC herein. The mercaptan was trimethylolpropane tris-3-mercaptopropionate,and is designated TMPTMP herein. The ratio of S-H to C=C (S-H/C=C) groups was 1.61.

Table I

| Effect of Concentration of HRL-PD50 on Clearpoint of PDLC Films Using the Copolymerizable Photoinitiator II. | |
|---|---|
| [HRL-PD50], % | Clearpoint, °C |
| 50.0 | 85.5 |
| 45.5 | 84.5 |
| 41.7 | 85.4 |
| 38.5 | 85.9 |
| 35.7 | 85.9 |
| 33.3 | 85.9 |

The clearpoint of the liquid crystal HRL-PD50 in bulk exhibits a range of 80.9° to 86.0°C. As can be seen from Table I, PDLCs containing this material evidence uniformly high and sharp clearpoints.

The effect of the photoinitiator II on clearpoint (CP) compared with DEAP is shown in Table II.

Table II

| Effect of Photoinitiator on Clearpoint. | | | | |
|---|---|---|---|---|
| Run No. | SH/C=C | Initiator | [HRL-PD50], % | CP, °C |
| 1 | 1.1 | 5% II | 41.7 | 88.5 |
| 2 | 1.57 | 5% II | 41.7 | 85.0 |
| 3 | 1.1 | 5% DEAP | 50.0 | 80.8 |
| 4 | 1.57 | 5% DEAP | 50 | 78.5 |
| 5 | 1.9 | 4% II | 41.7 | 81.0 |
| 6 | 1.9 | 2% II | 41.7 | 79.8 |
| 7 | 1.9 | 2% II | 35 | 79.9 |
| 8 | 1.9 | 5% DEAP | 41.7 | 73.9 |

From Table II, it is clear that the use of DEAP degrades the clearpoint, while the use of the copolymerizable photoinitiator II provides an improved clearpoint. Comparison of runs 1 and 3 and 2 and 4 show that a much higher clearpoint is achieved by using the copolymerizable photoinitiator II instead of the more conventional photoinitiator DEAP. In runs 5 through 8 (SH/C=C = 1.9), a similar effect can be noted (compare run 5 with run 8). The overall clearpoint in these runs was reduced due to the employment of more of the mercaptan material, which is somewhat soluble in the LC. But also, compound II can react with the mercaptan material to remove the latter from dissolving in the LC. Thus, comparing the clearpoints in run 5 with run 6, it can be seen that a higher concentration of compound II can remove excess mercaptan material, resulting in a higher clearpoint. There are, however, other factors relating to PDLC properties as they relate to displays, that favor the use of a higher SH/C=C ratio. It is apparent from these data in Table II that the DEAP contaminates the liquid crystal droplets in the polymer matrix, while there is substantially no contamination by the copolymerizable photoinitiator II.

The following mixtures were made up for environmental testing:

(A) HRL-URC + TMPTMP + II + QC + HRL-PD50

(B) HRL-URC + TMPTMP + II + HRL-PD50

(C) HRL-URC + TMPTMP + benzophenone + QC + HRL-PD50.

The monomer mixture, HRL-URC, is a Hughes proprietary mixture composed of the bis-adduct of isophorone diisocyanate with trimethylolpropane diallyl ether and allyl alcohol. The acronym "QC" refers to a photopolymerization accelerator, ethyl *p*-dimethylaminophenyl benzoate, commercially available under the trade name of Quantacure EPD from Ward Blenkinsop & Co., Ltd. (Cheshire, England).

Photostability studies of the foregoing mixtures were done with xenon lamp photoexposure at wavelengths longer than 372 nm and a temperature of 43°C. The results are listed in Table III, below. These results list the change (%Δ) (a) in the voltage [V(90)] required to obtain 90% transmission through the PDLC after the indicated time of exposure (Total Exp.), (b) in the contrast ratio (CR) after the indicated time of exposure, and (c) in the resistivity [$\rho$ (ohm-cm)].

Table III

| Photostability Studies. | | | | | | |
|---|---|---|---|---|---|---|
| Sample | Total Exp. hr. | ρ | %Δ | | | |
| | | | V(90) | | CR | |
| | | | 100 Hz | 500 Hz | 100 Hz | 500 Hz |
| A | 1029.2 | -78.7 | +31.0 | +12.2 | - 4.6 | +16.9 |
| B | 1029.2 | -- | +19.2 | +18.6 | - 2.5 | + 2.2 |
| C | 542.2 | -70.6 | -55.7 | -67.6 | -45.5 | -39.6 |

From Table III, it is seen that there is not as much change in time of exposure with Samples A and B (both polymerized with the copolymerizable photoinitiator II) as compared with Sample C (polymerized with

a conventional photoinitiator). Thus, the photostability of the PDLCs prepared using the copolymerizable photoinitiator in accordance with the invention is seen to be improved over the prior art approach.

As described above and in U.S. Patent 4,891,152, PDLC films can be obtained from photochemical polymerization in different morphologies. Although the droplet morphology ("Swiss cheese") has advantages for particular applications, the network morphology ("polymer ball") has advantages in other applications, particularly when lower operating voltages are required, since more LC is separated from the polymer matrix. The use of copolymerizable photoinitiators, such as II and III, under the proper compositional and reaction conditions, yields PDLC films composed of the network morphology, which possess superior properties over those films prepared with prior art photoinitiators.

Using the teachings of U.S. Patent 4,891,152, PDLC films with known network morphology, except using the copolymerizable photoinitiator II, were prepared. Thus, PDLC films were prepared from the monomers diurethane dimethacrylate (DUDMA), tripropylene glycol diacrylate (DiA5), and pentaerythritol tetramercaptopropionate (PETMP) and the commercial liquid crystal material BDH-E9 or BDH-E7 under concentration conditions which were known to give either droplet or network morphology. Photoinitiators DEAP or II or III were used in similar concentrations correspondingly with monomer/LC solutions of the same composition. The results of some physical measurements on the resulting PDLC films are summarized in Table IV. The monomer mixtures in Table IV denoted commonly as "A" were polymerized with the prior art photoinitiator DEAP, whereas those denoted commonly as "B" were polymerized with the copolymerizable photoinitiator II or III.

From Table IV, it is seen that regardless of the morphology obtained in the PDLC film, the clearpoint of the LC phase is always higher when the copolymerizable photoinitiator II or III is used, over the prior art photoinitiator DEAP. Similarly, regardless of the morphology obtained in the PDLC film, the resistivity of the PDLC film is higher or comparable when the copolymerizable photoinitiator II or III is used over the prior art photoinitiator DEAP. High resistivity is necessary for the efficient operation of many electro-optic display devices. Also, the electro-optic contrast ratio is either higher or comparable when the copolymerizable photoinitiator II or III is used over the prior art photoinitiator DEAP. Thus, use of the copolymerizable photoinitiator II or III yields predictable PDLC films of either droplet morphology or network morphology with improved physical, electrical, and electro-optic properties over those using a prior art photoinitiator.

Table IV. Formation of PDLC Films of Droplet or Network Morphology Using Prior Art and Copolymerizable Photoinitiators.

IV-A

| Mixture | Monomer DUDMA vol%;wt%# | DiA5 vol%;wt%# | PETMP vol%;wt%# | Initiators DEAP vol% | II wt% | III vol% |
|---|---|---|---|---|---|---|
| A | 19.40 | 19.40 | 48.60 | 12.60 | | |
| B | 19.40 | 19.40 | 48.60 | | 12.60 | |
| B′ | 21.10 | 21.10 | 52.70 | | 5.10 | |
| B" | 19.30 | 19.30 | 48.30 | | | 13.10 |
| B′" | 21.10 | 21.10 | 53.00 | | | 4.80 |
| A* | 33.00 | 33.00 | 33.00 | 1.00 | | |
| B* | 32.68 | 32.68 | 32.68 | | 1.96 | |
| A** | 32.00 | 32.00 | 32.00 | 4.00 | | |
| B** | 32.00 | 32.00 | 32.00 | | 4.00 | |
| A*** | 32.00 | 32.00 | 32.00 | 4.00 | | |
| B*** | 32.00 | 32.00 | 32.00 | | 4.00 | |

# When DEAP is used as the photoinitiator, the concentration of DUDMA, DiA5, and PETMP are given in volume percent (vol%); when II is used, the corresponding values are in weight percent (wt%).

IV-B

| Mixture | LC/A or B | Morphology | Clear-point, °C | Resistivity, Ω-cm | Contrast Ratio, 100V/0V |
|---|---|---|---|---|---|
| A | E9 (1:1) | droplet | 56.10 | $4.09\times10^9$ | 91 |
| B | E9 (1:1) | droplet | 68.90 | $4.27\times10^9$ | 75 |
| B′ | E9 (1:1) | droplet | 68.50 | $6.45\times10^9$ | 85 |
| B″ | E9 (1:1) | droplet | 68.40 | $4.04\times10^9$ | 80 |
| B′″ | E9 (1:1) | droplet | 67.50 | $5.56\times10^9$ | 89 |
| A* | E7 (1:1) | network | 54.90 | $14.4\times10^9$ | 7.7 |
| B* | E7 (1:1) | network | 55.80 | $16.0\times10^9$ | 13 |
| A** | E7 (1:1) | network | 50.90 | $9.20\times10^9$ | 5.5 |
| B** | E7 (1:1) | network | 56.00 | $11.0\times10^9$ | 12 |
| A*** | E7 (2:1) | network | 52.40 | $4.51\times10^9$ | 12 |
| B*** | E7 (2:1) | network | 56.00 | $7.70\times10^9$ | 36 |

PDLC films with a network gel morphology were prepared with the copolymerizable photoinitiator II and compared with those made from the same monomer and LC composition prepared with the prior art photoinitiator DEAP. These network gels were made from solutions with a very high concentration of LC (about 96%), a low concentration of monomers (about 3.3%), a low concentration of initiator (about 0.6%), and with long period UV exposures at low intensity in cells rubbed for surface parallel LC alignment. The results are summarized in Table V below, in which the multifunctional monomer pentaerythritol tetraacrylate

(PETA) was used with a difunctional monomer, either *p*-phenylene diacrylate (PhDA) or DiA5. The PDLC gels made with the traditional photoinitiator DEAP are denoted as "G-A" types, while those made with the copolymerizable photoinitiator II are denoted as "G-B" types. As shown in Table V, the "G-B" PDLCs also showed higher clearpoints than the "G-A" PDLCs. These results show that even at the low photoinitiator concentrations used for PDLC gels, use of the copolymerizable photoinitiator resulted in less contamination of the LC phase than occurred with a prior art photoinitiator. In addition, the "G-B" PDLCs also showed better electro-optical reversibility than did the "G-A" PDLCs. All of these cells showed reverse mode PDLC scattering, with high transparency in the off state and light scattering induced by applied voltages.

Table V. Formation of PDLC Films of Network Gel Morphology Using Prior Art and Copolymerizable Photoinitiators.*

| PDLC Gel | LC | Monomer Components | | | Photoinitiator | | LC CP in PCLC |
|---|---|---|---|---|---|---|---|
| | BDH-E7 | PhDA | DiA5 | PETA | DEAP | II | CP Range |
| | wt% | wt% | wt% | wt% | wt% | wt% | °C |
| G-$A_1$ | 96.0 | 2.1 | | 1.3 | 0.6 | | 55.7 - 57.6 |
| G-$B_1$ | 96.0 | 2.1 | | 1.3 | | 0.6 | 59.2 - 59.8 |
| G-$A_2$ | 96.1 | | 2.1 | 1.2 | 0.6 | | 57.5 - 58.6 |
| G-$B_2$ | 96.2 | | 2.1 | 1.1 | | 0.6 | 58.8 - 59.6 |

* Polymerized with a low intensity Hg lamp (5 mW/cm² in the 300 to 400 nm range) for 1.5 hrs.

PDLC films with a network gel morphology were prepared with the copolymerizable photoinitiator II with small amounts of multifunctional monomers in a nematic liquid crystal, with and without a chiral dopant. These network gels were made from solutions with a very high concentration of LC (about 96 to 97%), a low concentration of monomers (about 3.0 to 3.3%), a low concentration of initiator (about 0.5 to 0.8%), and with long period UV exposures at low intensity in cells with buffed polyimide for surface parallel LC alignment. The results are summarized in Table VI below, in which the difunctional monomer *p*-phenylene

diacrylate (PhDA) was used alone or with the multifunctional monomer pentaerythritol tetraacrylate (PETA), and the LC was BDH-E7 with or without BDH-CB15 added as a chiral dopant. As shown in Table VI, all of these PDLC gels had LC clearpoints close to that of the starting LC alone, similar to "G-B" samples in Table V, indicating little contamination of the LC by the initiator. All of these cells showed reverse mode PDLC scattering, with higher transparency in the off state and light scattering induced by applied voltages. The PDLC gels containing the chiral dopant (samples G-$B_4$ and G-$B_6$) had higher electro-optical threshold voltages, but also had higher contrast ratio due to their higher off-state transmission and low on-state transmission (high scattering).

Table VI. Formation of PDLC Films of Network Gel Morphology Using a Copolymerizable Photoinitiator and LCs with and Without a Chiral Dopant.*

| PDLC Gel | LC Components | | Monomer Components | | Photoinitiator | CP Range** |
|---|---|---|---|---|---|---|
| | BDH-E7 | BDH-CB15 | PhDA | PETA | II | °C |
| | wt% | wt% | wt% | wt% | wt% | |
| G-$B_3$ | 96.2 | | 3.3 | | 0.5 | 58.5 - 60.1 |
| G-$B_4$ | 88.2 | 8.0 | 3.0 | | 0.8 | 54.3 - 55.4 |
| G-$B_5$ | 96.5 | | 2.5 | 0.5 | 0.5 | 59.6 - 61.3 |
| G-$B_6$ | 88.5 | 7.8 | 2.6 | 0.5 | 0.6 | 54.0 - 55.4 |

* Polymerized with a low intensity Hg lamp (5 mW/$cm^2$ in the 300 to 400 nm range) for 1.5 hrs.

** The CP range of the starting LCs were 58.6 - 61.1 for E7, and 55.6 - 56.5 for E7 containing 8% CB15.

EXAMPLES

Example 1.

A monomer mixture was formed from 100 parts (by volume) of diurethane dimethacrylate (DUDMA), 100 parts of tripropylene glycol diacrylate (DiA5), 250 parts of pentaerythritol tetramercaptopropionate (PETMP), and 65 parts of 2,2-diethoxyacetophenone (DEAP). To this mixture was added 515 parts of the commercial liquid crystal material BDH-E9, which has a formulation of 15 wt% 4-cyano-4'-propyloxybiphenyl, 38 wt% 4-cyano-4'-heptyloxybiphenyl, and 9 wt% 4-cyano-4'-pentyl-*p*-terphenyl. After mixing for about 1 minute, the result was a solution having no separate phase.

The solution, having a viscosity slightly greater than water, was placed between two conductive glass plates that served as electrodes. The glass plates were previously coated on the inner sides (facing the solution) with a thin, electrically conductive coating of indium tin oxide (ITO). The spacing between the glass plates, which defines the thickness of the active element, was about 12 $\mu$m, and was established by using a premeasured Mylar spacer. The glass slides, with the solution therebetween, was placed under an ultraviolet light source. The source was a 350 watt, high pressure mercury lamp, enclosed in a lamp housing. The source emitted intense UV light at 365 nm. The total light intensity of the source in the 300 to 500 nm wavelength range was about 60 mwatts/$cm^2$ at the sample surface. Flood exposure of the cell lasted for three minutes, leading to polymerization of the monomer mixture. All of the mixing and processing was at ambient temperature.

The resulting PDLC cell was white in color and opaque. This cell resulted from mixture A in Table IV and exhibited a droplet morphology.

Example 2.

Example 1 was repeated, except that the solution was formulated as 100 parts (by weight) each of DUDMA and DiA5, 250 parts (by weight) of PETMP, and 65 parts (by weight) of the copolymerizable photoinitiator II. To this total solution was added an equal volume of the commercial liquid crystal material BDH-E9. The resulting PDLC cell was white in color and opaque. This cell resulted from mixture B in Table IV and exhibited a droplet morphology.

Example 3.

Example 1 was repeated, except that the solution was formulated (by volume parts) as 100 parts each of DUDMA and DiA5, 251 parts of PETMP, and 22.7 parts of the copolymerizable photoinitiator III. To this total solution was added an equal volume of the commercial liquid crystal BDH-E9. The resulting PDLC cell was white in color and opaque. This cell resulted from mixture B''' in Table IV and exhibited a droplet morphology.

Example 4.

Example 1 was repeated, except that the solution was formulated as 100 parts (by volume) each of DUDMA, DiA5, and PETMP, and 12 parts (by volume) of DEAP photoinitiator. To this solution was added an equal volume of the commercial liquid crystal material BDH-E7, which has the formulation of 51 wt% 4-cyano-4'-pentylbiphenyl, 25 wt% 4-cyano-4'-heptylbiphenyl, 16 wt% 4-cyano-4'-octyloxybiphenyl, and 8 wt% 4-cyano-4'-pentyl-*p*-terphenyl. The resulting PDLC cell was white in color and opaque. This cell resulted from mixture $A^{**}$ in Table IV and exhibited a network morphology.

Example 5.

Example 4 was repeated, except that the solution was formulated as 100 parts (by weight) each of DUDMA, DiA5, and PETMP, and 12 parts (by weight) of the copolymerizable photoinitiator II. To this mixture was added an equal volume of commercial liquid crystal material BDH-E7. The resulting PDLC cell was white in color and opaque. This cell resulted from mixture $B^{**}$ in Table IV and exhibited a network morphology.

Example 6.

Example 4 was repeated, except that 2 parts by weight of the commercial liquid crystal material BDH-E7 was dissolved in 1 part of the monomer/DEAP solution. The resulting PDLC cell was white in color and opaque. This cell resulted from mixture A*** in Table IV and exhibited a network morphology.

Example 7.

Example 5 was repeated, except that 2 parts of the commercial liquid crystal material BDH-E7 was dissolved in 1 part of the monomer/II solution. The resulting PDLC cell was white in color and opaque. This cell resulted from mixture B*** in Table IV and exhibited a network morphology.

Example 8.

The process of Example 1 was repeated with different mixtures of monomer, LC, and initiator. The monomer mixture was composed of 100 parts (by weight) of HRL-URC and 120 parts (by weight) of TMPTMP. This composition gave a ratio SH/C=C of 1.5. To 1 part (by volume) of this composite solution was added 1 part of the commercial liquid crystal material BDH-E7. To aliquots of this newly created solution was added varying amounts, as shown in FIG. 3, of II, DEAP, or benzophenone photoinitiators. The weight percentages shown in FIG. 3 are based on the total weight of the monomer solution only.

Example 9.

Example 8 was repeated, except the photoinitiator weight percent, based on the weight of the monomer solution only, was kept at a constant 3%, and the amount of TMPTMP was varied to achieve the SH/C=C ratios shown in FIG. 4.

Example 10.

A mixture was formed for PDLC network gel films by dissolving (by weight parts) 2.1 parts of *p*-phenylene diacrylate (PhDA), 1.3 parts of pentaerythritol tetraacrylate (PETA), and 0.6 parts of DEAP in 96 parts of BDH-E7. The mixture was warmed briefly to 60 °C to ensure that all of the components dissolved, cooled to room temperature, and placed between rubbed ITO electrodes on glass (90° alignment twist) to form a cell with a perimeter spacing from 12 μm thick Mylar film. The PDLC network gel was formed by UV cure exposure from a low intensity mercury arc lamp, which gave 5 $mW/cm^2$ of light in the 300 to 400 nm range, for a period of 1.5 hrs. The resulting PDLC film was transparent in the off-state, had a threshold of 10 $V_{rms}$. and became partially light scattering when higher voltages (e.g., 14 to 18 V) were applied. This cell resulted from mixture G-$A_1$ in Table V and exhibited a network gel PDLC morphology.

Example 11.

Example 10 was repeated, except that the solution was formulated (by weight parts) as 1.2 parts of *p*-phenylene diacrylate (PhDA), 1.3 parts of pentaerythritol tetraacrylate (PETA), and 0.6 parts of the copolymerizable photoinitiator II in 96 parts of BDH-E7. The resulting PDLC cell was transparent in the off-state, had a threshold voltage of 4 $V_{rms}$, and became light scattering when higher voltages (e.g., 12 to 20 V) were applied. This cell resulted from mixture G-$B_1$ in Table V and exhibited a network gel PDLC morphology.

Example 12.

Example 10 was repeated except that the solution was formulated (by weight parts) as 2.1 parts of tripropylene glycol diacrylate (DiA5), 1.2 parts of pentaerythritol tetraacrylate (PETA), and 0.6 parts of DEAP in 96.1 parts of BDH-E7. The resulting PDLC cell was transparent in the off-state, had a threshold voltage of 9 $V_{rms}$, and became light scattering when higher voltages (e.g., 16 to 24 V) were applied. This cell resulted from mixture G-$A_2$ in Table V and exhibited a network gel PDLC morphology.

Example 13.

Example 10 was repeated except that the solution was formulated (by weight parts) as 2.1 parts of tripropylene glycol diacrylate (DiA5), 1.1 parts of pentaerythritol tetraacrylate (PETA), and 0.6 parts of the copolymerizable photoinitiator II in 96.2 parts of BDH-E7. The resulting PDLC cell was transparent in the off-state, had a threshold voltage of 7 $V_{rms}$, and became light scattering when higher voltages (e.g., 14 to 20 V) were applied. This cell resulted from mixture G-$B_2$ in Table V and exhibited a network gel PDLC morphology.

Example 14.

A mixture was prepared for PDLC network gel films by dissolving (by weight parts) 3.3 parts of *p*-phenylene diacrylate (PhDA), and 0.5 parts of the copolymerizable photoinitiator II in 96.2 parts of BDH-E7. The mixture was heated to 60 °C to dissolve all of the components, cooled to room temperature, and placed between polyimide-coated ITO electrodes on glass. The electrodes had been buffed for surface-parallel alignment (no twist) in a cell with two sealed edges and a thickness of 10 µm controlled by internal spacers. The PDLC network gel was formed by UV cure exposure from a low intensity mercury arc lamp, which gave 4 mW/$cm^2$ of light in the 300 to 400 nm range, for a period of 2 hours. The resulting PCLC cell was fairly transparent in the off-state, had a threshold voltage of about 2 $V_{rms}$,and became partially light scattering when higher voltages (e.g., 6 to 10 V) were applied. This cell resulted from mixture G-$B_3$ in Table VI and exhibited a network gel PDLC morphology.

Example 15.

Example 14 was repeated, except that the solution was formulated as 3.0 parts of *p*-phenylene diacrylate (PhDA) and 0.8 parts of the copolymerizable photoinitiator II in an LC mixture of 88.2 parts of BDH-E7 and 8.0 parts of the chiral liquid crystal BDH-CB15. The resulting PDLC cell was highly transparent in the off-state, had a threshold voltage of about 16 $V_{rms}$, and became highly light scattering when higher voltages (e.g., 19 to 20 V) were applied. This cell resulted from mixture G-$B_4$ in Table VI and exhibited a network gel PDLC morphology.

Example 16.

Example 14 was repeated, except that the solution was formulated as 2.5 parts of *p*-phenylene diacrylate (PhDA), 0.5 parts of pentaerythritol tetraacrylate (PETA), and 0.5 parts of the copolymerizable photoinitiator II in an LC mixture of 96.5 parts of BDH-E7. The resulting PDLC cell was fairly transparent in the off-state, had a threshold voltage of about 5 $V_{rms}$, and became partially light scattering when higher voltages (e.g., 10 to 16 V) were applied. This cell resulted from mixture G-$B_5$ in Table VI and exhibited a network gel PDLC morphology.

Example 17.

Example 14 was repeated, except that the solution was formulated as 2.6 parts of *p*-phenylene diacrylate (PhDA), 0.5 parts of pentaerythritol tetraacrylate (PETA), and 0.6 parts of the copolymerizable photoinitiator II in an LC mixture of 88.5 parts of BDH-E7 and 7.8 parts of the chiral liquid crystal BDH-CB15. The resulting PDLC cell was transparent in the off-state, had a threshold voltage of about 12 $V_{rms}$, and became highly light scattering when higher voltages (e.g., 16 to 18 V) were applied. This cell resulted from mixture G-$B_6$ in Table VI and exhibited a network gel PDLC morphology.

Thus, there has been disclosed a method of reducing the contamination in the LC phase and increasing the photostability of a polymer dispersed liquid crystal material. It will be readily apparent to those of ordinary skill in this art that various changes and modifications of an obvious nature may be made without departing from the spirit of the invention, and all such changes and modifications are considered to fall within the scope of the invention, as defined by the appended claims.

## Claims

1. A method of increasing photostability and resistivity of a polymer dispersed liquid crystal material and providing a nematic phase temperature range approaching that of pure bulk liquid crystal of the

separated liquid crystal phase therein, comprising preparing a monomer/liquid crystal system with a copolymerizable photoinitiator and reacting the same in the presence of ultraviolet light.

**2.** The method of Claim 1 wherein said copolymerizable photoinitiator has the formula

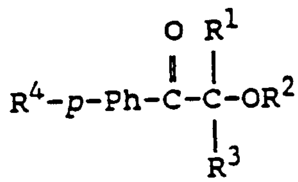

where

Ph is phenyl

$R^1$ and $R^3$ are each H, $C_1$-$C_6$ alkyl or phenyl,

$R^2$ is H, $C_1$-$C_6$ alkyl, $C_1$-$C_6$ alkanoyl, or the group Z,

$R^4$ is H, halogen, $C_1$-$C_{12}$ alkyl, $C_1$-$C_{12}$ alkoxy, $C_1$-$C_{12}$ alkylthio or the group $-X[(CH_2-CH_2-O)_n-Z]_m$, and

X is O, S, or N,

n is an integer from 0 to 4,

m is the integer 1 for X = O or the integer 1 or 2 for X = N,

Z is the group -CO-CR=CR'R''

with R, R', R'' each being H or $CH_3$, and always at least one of the $R^2$ or $R^4$ groups containing the group Z.

**3.** The method of Claim 2 wherein said copolymerizable photoinitiator consists essentially of a derivative of 2-hydroxy-2-methyl-1-phenylpropane-1-one.

**4.** The method of Claim 3, wherein said copolymerizable photoinitiator consists essentially of 4-(2-acryloyloxyethoxy)phenyl 2-hydroxy-2-propyl ketone.

**5.** The method of Claim 3 wherein said copolymerizable photoinitiator consists essentially of 4-(2-allyl-oxymethoxy)phenyl 2-hydroxy-2-propyl ketone.

**6.** The method of any of Claims 3-5 wherein said monomer/liquid crystal system is reacted with about 0.1 to 10% of said copolymerizable photoinitiator at a temperature of about 25° to 60°C for a period of time ranging from about 0.1 to 200 min of exposure to ultraviolet light.

**7.** The method of Claim 6 wherein the amount of said copolymerizable photoinitiator ranges from about 0.5 to 5 wt%.

**8.** The method of any of Claims 1-7 wherein said monomer includes at least one multifunctional monomer.

**9.** The method of Claim 8 wherein said at least one multifunctional monomer is selected from the group consisting of bis(1-acryloxy-2-hydroxypropyl)phthalate, bisphenol-A diacrylate, 1,3-butanediol diacrylate, 1,4-butanediol diacrylate, diethylene glycol diacrylate, dipentaerythritol monohydroxypentaacrylate, ethylene diacrylate, glycerol triethoxy triacrylate, glycerol propoxy triacrylate, 1,6-hexamethylene diacrylate, 3-methylpentanediol diacrylate, neopentyl glycol diacrylate, pentaerythritol tetraacrylate, pentaerythritol triacrylate, p-phenylene diacrylate, poly(ehtylene glycol 400 diacrylate), 1,3-propanediol diacrylate, tetraethylene glycol diacrylate, thiodiethyltrimethyl-olpropanetriethoxytriacrylate, 1,1,1-trimethylolpropane triacrylate,tripropylene glycol diacrylate, tris(2-acryl-oxyehtyl)isocyanurate, ehtoxylated bis-phenol-A diacrylate, tris(acryloxy-2-hydroxypropyl)ether, the diurethane adduct of isophorone with allyl alcohol, the diurethane adduct of isophorone diisocyanate with trimethylolpropane diallyl ether, the diurethane adduct of isophorone diisocyanate with allyl alcohol and trimethylolpropane diallyl ether, the diurethane adduct of toluene diisocyanate with allyl alcohol, the diurethane adduct of toluene diisocyanate with trimethylolpropane diallyl ether, the diurethane adduct of toluene diisocyanate with

trimethylolpropane diallyl ether and allyl ether, and mixtures thereof.

**10.** The method of Claim 8 further including at least one multifunctional mercaptan.

**11.** The method of Claim 10 wherein said at least one multfunctional mercaptan is selected from the group consisting of 2,2'-dimercaptodiethyl ether, glycol dimercaptoacetate, glycol dimercaptopropionate, pentaerythritol tetra(3-mercaptopropionate, pentaerythritol tetrathioglycolate, trimethylolethane tri(3-mercaptopropionate), trimethylethane trithioglycolate, trimethylolpropane tri(3-mercaptopropionate), trimethylolpropane trithioglycolate, dipentaerythritol hexa(3-mercaptopropionate), polyehtylene glycol dimercaptoacetate, polyethylene glycol di(3-mercaptopropionate), and mixtures thereof.

**12.** the method of any of Claims 1-11 wherein said liquid crystal is selected from the group consisting of liquid crystals consisting of materials substituted with cyano, fluoro, chloro, alkyl, or alkoxy groups or combinations thereof and belonging to the biphenyl, pyrimidine, phenylcyclohexane, terphenyl, tolane, dipehenyldiacetylene, of phenyl benzoate class of liquid crystals, or mixtures thereof.

**13.** The method of any of Claims 1-12 wherein said liquid crystal material is present in an amount ranging from about 20 to 99 percent by volume of the monomer/liquid crystal/photoinitiator solution.

**14.** The method of Claim 13 wherein said monomer/liquid crystal system contians liquid crystal in the range of about 30 to 70%, about 1 to 5% copolymerizable photoinitiator which consists essentially of a derivative of 2-hydroxy-2-methyl-1-phenylpropane-1-one, and has a monomer system containing at least one multifunctional acrylic monomer and at least one multifunctional mercaptan, and upon which ultraviolet curing of about 0.1 to 10 minutes forms a polymer dispersed liquid crystal with a liquid crystal droplet morphology.

**15.** The method of Claim 13 wherein said monomer/liquid crystal system contains liquid crystal in the range of about 30 to 70%, about 1 to 5% copolymerizable photoinitiator which consists essenially of a derivative of 2-hydroxy-2-methyl-1-phenylpropane-1-one, and has a monomer system containing at least one multifunctional acrylic monomer, and which upon ultraviolet curing of about 0.1 to 10 minutes forms a polymer dispersed liquid crystal with a network morphology.

**16.** The method of Claim 13 wherein said monomer/liquid crystal system contains liquid crystal in the range of about 70 to 99%, about 0.1 to 1% copolymerizable photoinitiator which consists essentially of a derivative of 2-hydroxy-2-methyl-1-phenylpropane-1-one, and has a monomer system containing at least one multifunctional acrylic monomer, and which upon ultraviolet curing of about 10 to 200 minutes forms a polymer dispersed liquid crystal with a network-gel morphology.

**17.** The method of any of Claims 13-16 wherein said monomer/liquid crystal system has a cyanobiphenyl-containing liquid crystal mixture, and said copolymerizable photoinitiator consists essentially of 4-(2-acryloyloxyethoxy)phenyl 2-hydroxy-2-propyl ketone, or 4-(2-allyloxymethoxy)phenyl 2-hydroxy-2-propyl ketone, or mixture thereof.

**18.** The method of Claim 13 wherein said liquid crystal material contains at least one of a chiral dopant and a chiral liquid crystal component.

**19.** The method of Claim 16 wherein said monomer/liquid crystal system contains a liquid crystal in the range of about 70 to 99%, which is doped with a chiral component.

**20.** The method of Claim 18 and/or 19 wherein said chiral component is a cyanobiphenyl compound.

**Patentansprüche**

**1.** Ein Verfahren zur Erhöhung der Photostabilität und Widerstandsfähigkeit eines polymerdispergierten Flüssigkristallmaterials und zum Liefern eines nematischen Phasen-Temperaturbereichs, der dem von reinen, in Masse vorliegenden Flüssigkristallen der darin abgetrennten Flüssigkristallphase nahekommt, die
die Herstellung eines Monomer/Flüssigkristall-Systems mit einem copolymerisierbaren Photoinitiator

und
die Reaktion desselben in der Gegenwart von ultraviolettem Licht umfaßt.

2. Das Verfahren nach Anspruch 1, worin besagter copolymerisierbarer Photoinitiator die Formel

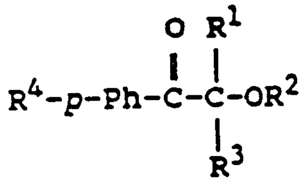

hat, worin
Ph = Phenyl ist,
$R^1$ und $R^3$ jeweils H, $C_1$-$C_6$-Alkyl oder Phenyl sind,
$R^2$ = H, $C_1$-$C_6$-Alkyl, $C_1$-$C_6$-Alkanoyl oder die Gruppe Z ist,
$R^4$ = H, Halogen, $C_1$-$C_{12}$-Alkyl, $C_1$-$C_{12}$-Alkoxy, $C_1$-$C_{12}$-Alkylthio oder die Gruppe $-X[(CH_2-CH_2-O)_n-Z]_m$ ist, und
X = O, S oder N ist,
n eine ganze Zahl von 0 bis 4 ist,
m die ganze Zahl 1 für x = 0 oder die ganze Zahl 1 oder 2 für X = N ist,
Z die Gruppe -CO-CR = CR'R" ist,
wobei R, R', R" jeweils H oder CH sind; und immer mindestens eine der $R^2$- oder $R^4$-Gruppen die Gruppe Z enthalten.

3. Das Verfahren nach Anspruch 2, worin besagter copolymerisierbarer Photoinitiator im wesentlichen aus einem Derivat von 2-Hydroxy-2-methyl-1-phenylpropan-1-on besteht.

4. Das Verfahren nach Anspruch 3, worin besagter copolymerisierbarer Photoinitiator im wesentlichen aus 4-(2-Acryloyloxyethoxy)phenyl-2-hydroxy-2-propylketon besteht.

5. Das Verfahren nach Anspruch 3, worin besagter copolymerisierbarer Photoinitiator im wesentlichen aus 4-(2-Allyloxymethoxy)phenyl-2-hydroxy-2-propylketon besteht.

6. Das Verfahren nach einem der Ansprüche 3 bis 5, worin besagtes Monomer/Flüssigkristall-System mit ungefähr 0,1 bis 10% von besagtem copolymerisierbarem Photoinitiator bei einer Temperatur von ungefähr 25 °C bis 60 °C für eine Zeitperiode, die im Bereich von ungefähr 0,1 bis 200 min unter Einwirkung von ultraviolettem Licht liegt, reagiert.

7. Das Verfahren nach Anspruch 6, worin die Menge an besagtem copolymerisierbarem Photoinitiator im Bereich von ungefähr 0,5 bis 5 Gew.% liegt.

8. Das Verfahren nach einem der Ansprüche 1 bis 7, worin besagtes Monomer mindestens ein multifunktionelles Monomer enthält.

9. Das Verfahren nach Anspruch 8, worin besagtes mindestens eine multifunktionelle Monomer ausgewählt ist aus der Gruppe, bestehend aus:
Bis(1-acryloxy-2-hydroxypropyl)phthalat, Bisphenol-A-diacrylat, 1,3-Butandioldiacrylat, 1,4-Butandioldiacrylat, Diethylenglycoldiacrylat Dipentaerythritmonohydroxypentaacrylat, Ethylendiacrylat, Glyzerintriethoxytriacrylat, Glyzerinpropoxytriacrylat, 1,6-Hexamethylendiacrylat, 3-Methylpentandioldiacrylat, Neopentylglycoldiacrylat, Pentaerythrittetraacrylat, Pentaerythrittriacrylat, p-Phenylendiacrylat, Poly-(ethylenglycol-400-diacrylat, 1,3-Propandioldiacrylat, Tetraethylenglycoldiacrylat, Thiodiethyltrimethylolpropantriethoxytriacrylat, 1,1,1-Trimethylolpropantriacrylat, Tripropylenglycoldiacrylat, Tris(2-acryloxyethyl)isocyanurat, ethoxyliertes Bisphenol-A-diacrylat, Tris(acryloxy-2-hydroxypropyl)ether, das Diurethanaddukt von Isophoron mit Allylalkohol, das Diurethanaddukt von Isophorondiisocyanat mit Trimethylolpropandiallylether, das Diurethanaddukt von Isophorondiisocyanat mit Allylalkohol und Trimethylolpropandiallylether, das Diurethanaddukt von Toluoldiisocyanat mit Allylalkohol, das Diurethanaddukt von

Toluoldiisocyanat mit Trimethylolpropandiallylether, das Diurethanaddukt von Toluoldiisocyanat mit Trimethylolpropandiallylether und Allylether, und Mischungen davon.

**10.** Das Verfahren nach Anspruch 8, weiter mindestens ein multifunktionelles Mercaptan enthaltend.

**11.** Das Verfahren nach Anspruch 10, worin besagtes mindestens eine multifunktionelle Mercaptan ausgewählt ist aus der Gruppe, bestehend aus 2,2'-Dimercaptodimethylether, Glycoldimercaptoacetat, Glycoldimercaptopropionat, Pentaerythrittetra(3-mercaptopropionat), Pentaerythrittetrathioglycolat, Trimethylolethantri(3-mercaptopropionat), Trimethylethantrithioglycolat, Trimethylolpropantri(3-mercaptopropionat), Trimethylolpropantrithioglycolat, Dipentaerythrithexa(3-mercaptopropionat), Polyethylenglycoldimercaptoacetat, Polyethylenglycoldi-(3-mercaptopropionat), und Mischungen davon.

**12.** Das Verfahren nach einem der Ansprüche 1 bis 11, worin besagter Flüssigkristall ausgewählt ist aus der Gruppe, bestehend aus Flüssigkristallen, die aus Materialien bestehen, die mit Cyan, Fluor, Chlor, Alkyl- oder Alkoxygruppen oder Kombinationen davon substituiert sind und zur Biphenyl-, Pyrimidin-, Phenylcyclohexan-, Terphenyl-, Tolan-, Diphenyldiacethylen- oder Phenylbenzoatklasse von Flüssigkristallen, oder Mischungen davon, gehören.

**13.** Das Verfahren nach einem der Ansprüche 1 bis 12, worin besagtes Flüssigkristallmaterial in einer Menge gegenwärtig ist, die im Bereich von ungefähr 20 bis 99 Vol.% der Monomer/Flüssigkristall/Photoinitiator-Lösung liegt.

**14.** Das Verfahren nach Anspruch 13, worin besagtes Monomer/Flüssigkristall-System Flüssigkristalle im Bereich von ungefähr 30 bis 70% und ungefähr 1 bis 5% copolymerisierbaren Photoinitiator enthält, welcher im wesentlichen aus einem Derivat von 2-Hydroxy-2-methyl-1-phenylpropan-1-on besteht, und ein Monomersystem aufweist, das mindestens ein multifunktionelles Acrylmonomer und mindestens ein multifunktionelles Mercaptan enthält, und welches auf ultraviolettes Vernetzen von ungefähr 0,1 bis 10 Minuten einen polymerdispergierten Flüssigkristall mit einer Tröpfchenmorphologie bildet.

**15.** Das Verfahren nach Anspruch 13, worin besagtes Monomer/Flüssigkristall-System Flüssigkristalle im Bereich von ungefähr 30 bis 70% und ungefähr 1 bis 5% copolymerisierbaren Photoinitiator enthält, welcher im wesentlichen aus einem Derivat von 2-Hydroxy-2-methyl-1-phenylpropan-1-on besteht, und ein Monomersystem aufweist, das mindestens ein multifunktionelles Acrylmonomer enthält, und welches auf ultraviolettes Vernetzen von ungefähr 0,1 bis 10 Minuten einen polymerdispergierten Flüssigkristall mit einer Netzwerkmorphologie bildet.

**16.** Das Verfahren nach Anspruch 13, worin besagtes Monomer/Flüssigkristall-System Flüssigkristalle im Bereich von ungefähr 70 bis 99% und ungefähr 0,1 bis 1% copolymerisierbaren Photoinitiator enthält, welcher im wesentlichen aus einem Derivat von 2-Hydroxy-2-methyl-1-phenylpropan-1-on besteht, und ein Monomersystem aufweist, das mindestens ein multifunktionelles Acrylmonomer enthält, und welches auf ultraviolettes Vernetzen von ungefähr 10 bis 200 Minuten einen polymerdispergierten Flüssigkristall mit einer Netzwerk-Gel-Morphologie bildet.

**17.** Das Verfahren nach einem der Ansprüche 13 bis 16, worin besagtes Monomer/Flüssigkristall-System eine Cyanbiphenyl enthaltende Flüssigkristallmischung aufweist, und besagter copolymerisierbarer Photoinitiator im wesentlichen aus 4-(2-Acryloyloxyethoxy)phenyl-2-hydroxy-2-propylketon oder 4-(2-Allyloxymethoxy)phenyl-2-hydroxy-2-propylketon oder Mischungen davon besteht.

**18.** Das Verfahren nach Anspruch 13, worin besagtes Flüssigkristallmaterial mindestens eine chirale Dotierungssubstanz und eine chirale Flüssigkristallkomponente enthält.

**19.** Das Verfahren nach Anspruch 16, worin besagtes Monomer/Flüssigkristallsystem einen Flüssigkristall im Bereich von ungefähr 70 bis 99% enthält, der mit einer chiralen Komponente dotiert ist.

**20.** Das Verfahren nach Anspruch 18 und/oder 19, worin besagte chirale Komonente eine Cyanbiphenylkomponente ist.

## Revendications

1. Procédé pour accroître la photostabilité et la résistivité d'une matière à cristaux liquides dispersée dans un polymère et parvenir à une plage de températures de phase nématique avoisinant celle du cristal liquide pur en masse de la phase de cristal liquide distincte, comprenant la préparation d'une formulation de monomère/cristal liquide avec un photoinitiateur copolymérisable et la réaction de ces constituants en présence de lumière ultraviolette.

2. Procède suivant la revendication 1, dans lequel le photoinitiateur copolymérisable répond à la formule

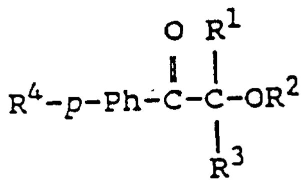

dans laquelle

Ph représente un groupe phényle

$R^1$ et $R^3$ représentent chacun H, un groupe alkyle en $C_1$ à $C_6$ ou phényle,

$R^2$ représente H, un groupe alkyle en $C_1$ à $C_6$, alcanoyle en $C_1$ à $C_6$ ou le groupe Z,

$R^4$ représente H, un halogène, un groupe alkyle en $C_1$ à $C_{12}$, alkoxy en $C_1$ à $C_{12}$, alkylthio en $C_1$ à $C_{12}$ ou le groupe $-X[(CH_2-CH_2-O)_n-Z]_m$, et

X représente O, S ou N,

n est un nombre entier de 0 à 4,

m est le nombre entier 1 pour X = O ou le nombre entier 1 ou 2 pour X = N,

Z représente le groupe -CO-CR = CR'R''

R, R' et R'' représentant chacun H ou un groupe $CH_3$, et au moins un des groupes $R^2$ et $R^4$ contenant toujours le groupe Z.

3. Procédé suivant la revendication 2, dans lequel le photoinitiateur copolymérisable consiste essentiellement en un dérivé de 2-hydroxy-2-méthyl-1-phénylpropane-1-one.

4. Procédé suivant la revendication 3, dans lequel le photoinitiateur copolymérisable consiste essentiellement en 4-(2-acryloyloxyéthoxy)phényl-2-hydroxy-2-propylcétone.

5. Procédé suivant la revendication 3, dans lequel le photoinitiateur copolymérisable consiste essentiellement en 4-(2-allyl-oxyméthoxy)phényl-2-hydroxy-2-propylcétone.

6. Procédé suivant l'une quelconque des revendications 3 à 5, dans lequel la formulation de monomère/cristal liquide est amenée à réagir avec une quantité d'environ 0,1 à 10 % du photoinitiateur copolymérisable à une température comprise dans l'intervalle d'environ 25° à 60°C pendant un temps allant d'environ 0,1 à 200 minutes d'exposition à la lumière ultraviolette.

7. Procédé suivant la revendication 6, dans lequel la quantité du photoinitiateur copolymérisable est comprise dans l'intervalle d'environ 0,5 à 5 % en poids.

8. Procédé suivant l'une quelconque des revendications 1 à 7, dans lequel le monomère comprend au moins un monomère multifonctionnel.

9. Procédé suivant la revendication 8, dans lequel le monomère multifonctionnel d'au moins un type est choisi dans le groupe consistant en phtalate de bis(1-acryloxy-2-hydroxypropyle), diacrylate de bisphénol-A, diacrylate de 1,3-butanediol, diacrylate de 1,4-butanediol, diacrylate de diéthylèneglycol, monohydroxypentaacrylate de dipentaérythritol, diacrylate d'éthylène, triéthoxytriacrylate de glycérol, propoxytriacrylate de glycérol, diacrylate de 1,6-hexaméthylène, diacrylate de 3-méthylpentanediol, diacrylate de néopentylglycol, tétra-acrylate de pentaérythritol, triacrylate de pentaérythritol, diacrylate de p-phénylène, poly(diacrylate d'éthylèneglycol 400), diacrylate de 1,3-propanediol, diacrylate de tétraéthylèneglycol, triéthoxytriacrylate de thiodiéthyltriméthylolpropane, triacrylate de 1,1,1-triméthylolpropane, diacrylate de tripropylèneglycol, isocyanurate de tris(2-acryloxyéthyle), diacrylate de bis-phénol-A éthoxylé, éther de tris(acryloxy-2-hydroxypropyle), le produit d'addition de type diuréthanne d'isophorone avec l'alcool allylique, le produit d'addition de type diuréthanne, de diisocyanate d'isophorone avec l'éther diallylique de triméthylolpropane, le produit d'addition de type diuréthanne du diisocyanate d'isophorone avec l'alcool allylique et l'éther diallylique de triméthylolpropane, le produit d'addition de type diuréthanne du toluène-diisocyanate avec l'alcool allylique, le produit d'addition de type diuréthanne du toluène-diisocyanate avec l'éther diallylique de triméthylolpropane, le produit d'addition de type diuréthanne du toluène-diisocyanate avec l'éther diallylique et l'éther allylique de triméthylolpropane, ainsi que leurs mélanges.

**10.** Procédé suivant la revendication 8, comprenant en outre au moins un mercaptan multifonctionnel.

**11.** Procédé suivant la revendication 10, dans lequel le mercaptan multifonctionnel d'au moins un type est choisi dans le groupe consistant en éther de 2,2'-dimercaptodiéthyle, dimercaptoacétate de glycol, dimercaptopropionate de glycol, tétra(3-mercaptopropionate) de pentaérythritol, tétrathioglycolate de pentaérythritol, tri(3-mercaptopropionate) de triméthyloléthane, trithioglycolate de triméthyléthane, tri(3-mercaptopropionate) detriméthylopropane, trithioglycolate de triméthylolpropane, hexa(3-mercaptopropionate) de dipentaérythritol, dimercaptoacétate de polyéthylèneglycol, di(3-mercaptopropionate)-depolyéthylèneglycol, et leurs mélanges.

**12.** Procédé suivant l'une quelconque des revendications 1 à 11, dans lequel le cristal liquide est choisi dans le groupe consistant en des cristaux liquides formés de matières substituées avec des groupes cyano, fluoro, chloro, alkyle ou alkoxy ou leurs associations et appartenant à la catégorie des cristaux liquides à structures biphényle, pyrimidine, phénylcyclohexane, terphényle, tolane, diphényldiacétylène et phénylbenzoate, ou leurs mélanges.

**13.** Procédé suivant l'une quelconque des revendications 1 à 12, dans lequel la matière à cristaux liquides est présente en une quantité allant d'environ 20 à 99 pour cent en volume de la solution de monomère/cristal liquide/photoinitiateur.

**14.** Procédé suivant la revendication 13, dans lequel la formulation de monomère/cristal liquide contient environ 30 à 70 % de cristal liquide, environ 1 à 5 % d'un photoinitiateur copolymérisable qui consiste essentiellement en un dérivé de 2-hydroxy-2-méthyl-1-phénylpropane-1-one, et possède une formulation de monomères contenant au moins un monomère acrylique multifonctionnel et au moins un mercaptan multifonctionnel, et qui, par réticulation par la lumière ultraviolette pendant environ 0,1 à 10 minutes, forme un cristal liquide dispersé dans un polymère, avec une morphologie comprenant des gouttelettes de cristal liquide.

**15.** Procédé suivant la revendication 13, dans lequel la formulation de monomère/cristal liquide contient environ 30 à 70 % de cristal liquide, environ 1 à 5 % d'un photoinitiateur copolymérisable qui consiste essentiellement en un dérivé de 2-hydroxy-2-méthyl-1-phénylpropane-1-one, et possède une formulation de monomères contenant au moins un monomère acrylique multifonctionnel, et qui, par réticulation par la lumière ultraviolette pendant environ 0,1 à 10 minutes, forme un cristal liquide dispersé dans un polymère, ayant une morphologie en réseau.

**16.** Procédé suivant la revendication 13, dans lequel la formulation de monomère/cristal liquide contient environ 70 à 99 % de cristal liquide, environ 0,1 à 1 % d'un photoinitiateur copolymérisable qui consiste essentiellement en un dérivé de 2-hydroxy-2-méthyl-1-phénylpropane-1-one, et possède une formulation de monomères contenant au moins un monomère acrylique multifonctionnel, et qui, par réticulation par la lumière ultraviolette pendant environ 10 à 200 minutes, forme un cristal liquide dispersé dans un polymère, ayant une morphologie de gel-réseau.

**17.** Procédé suivant l'une quelconque des revendications 13 à 16, dans lequel la formulation de monomère/cristal liquide comprend un mélange de cristaux liquides à structure cyanobiphényle, et le photoinitiateur copolymérisable consiste essentiellement en 4-(2-acryloyloxyéthoxy)phényl-2-hydroxy-2-propylcétone ou 4-(2-allyloxyméthoxy)phényl-2-hydroxy-2-propylcétone, ou bien un de leurs mélanges.

**18.** Procédé suivant la revendication 13, dans lequel la matière à cristaux liquides contient au moins un des composés consistant en un dopant chiral et un constituant à cristaux liquides chiral.

**19.** Procédé suivant la revendication 16, dans lequel la formulation de monomère/cristal liquide contient environ 70 à 99 % d'un cristal liquide, qui est dopé avec un constituant chiral.

**20.** Procédé suivant la revendication 18 et/ou la revendication 19, dans lequel le constituant chiral est un composé à structure cyanobiphényle.

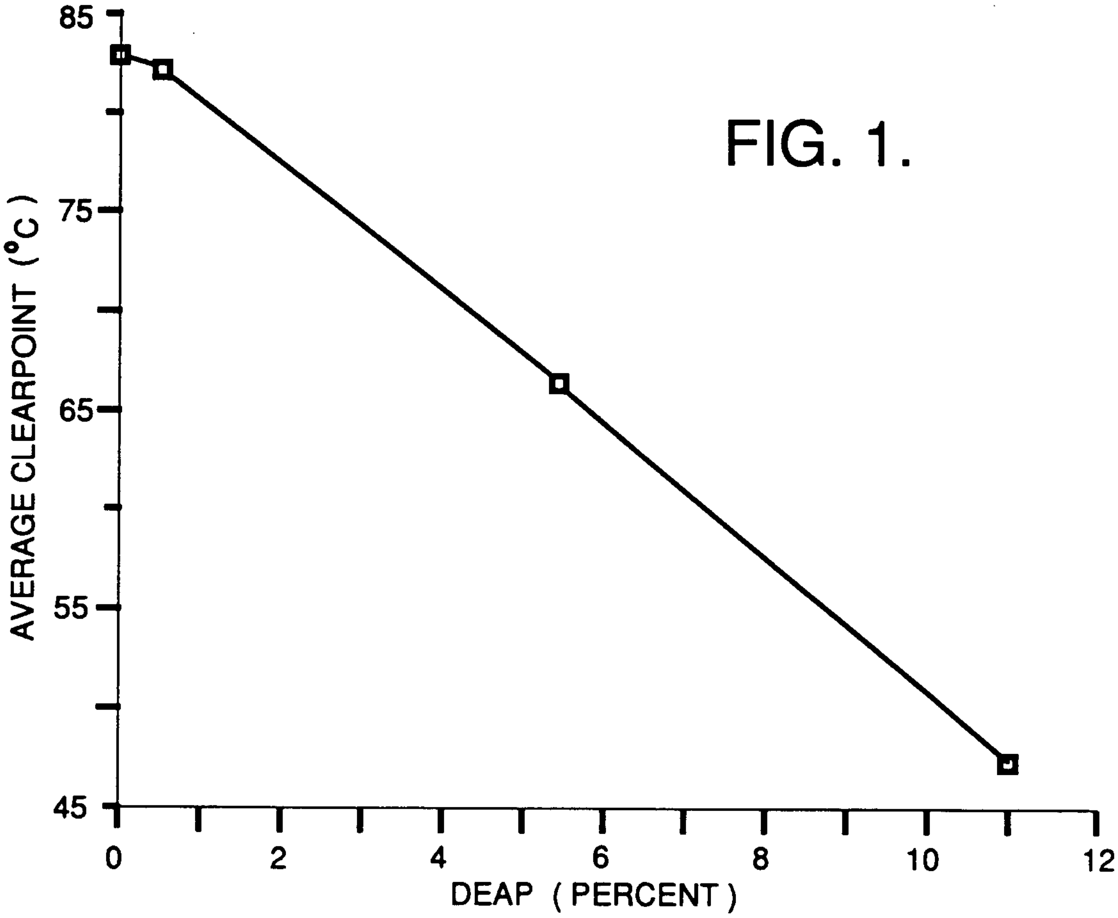
85
75
65
55
45
AVERAGE CLEARPOINT (°C)
0
2
4
6
8
10
12
DEAP ( PERCENT )

FIG. 1.

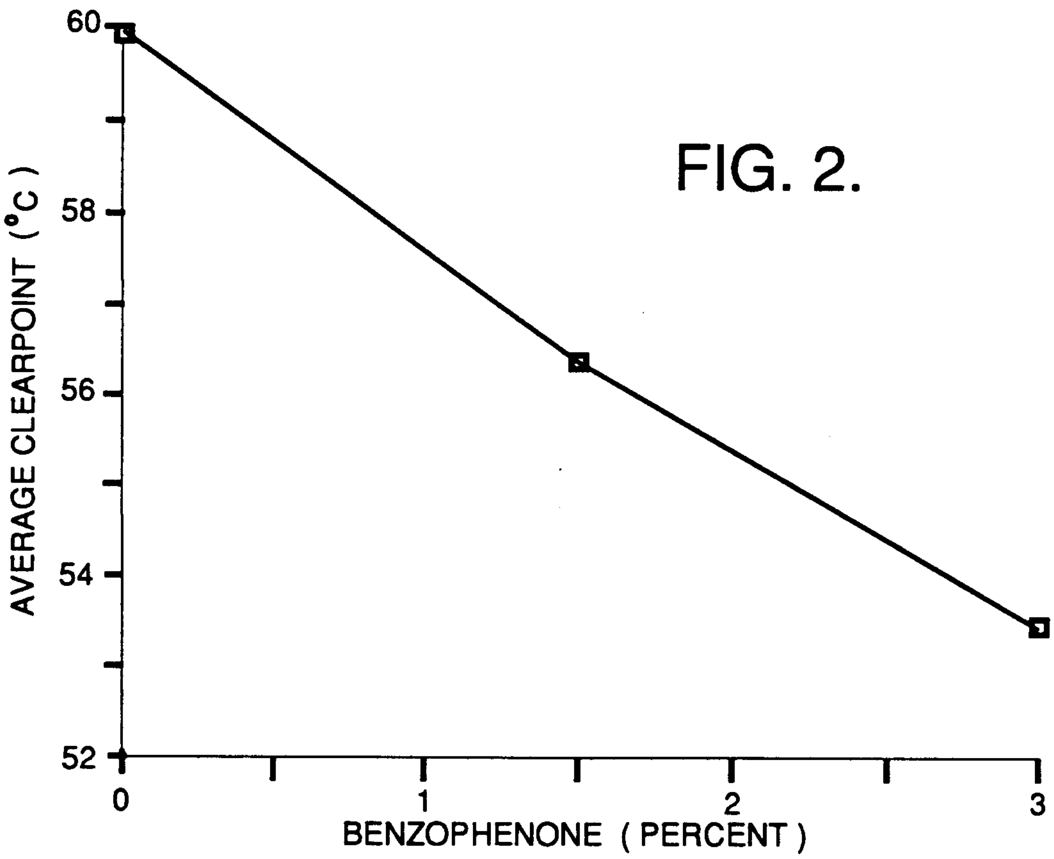
60
58
56
54
52
AVERAGE CLEARPOINT (°C)
0
1
2
3
BENZOPHENONE ( PERCENT )

FIG. 2.

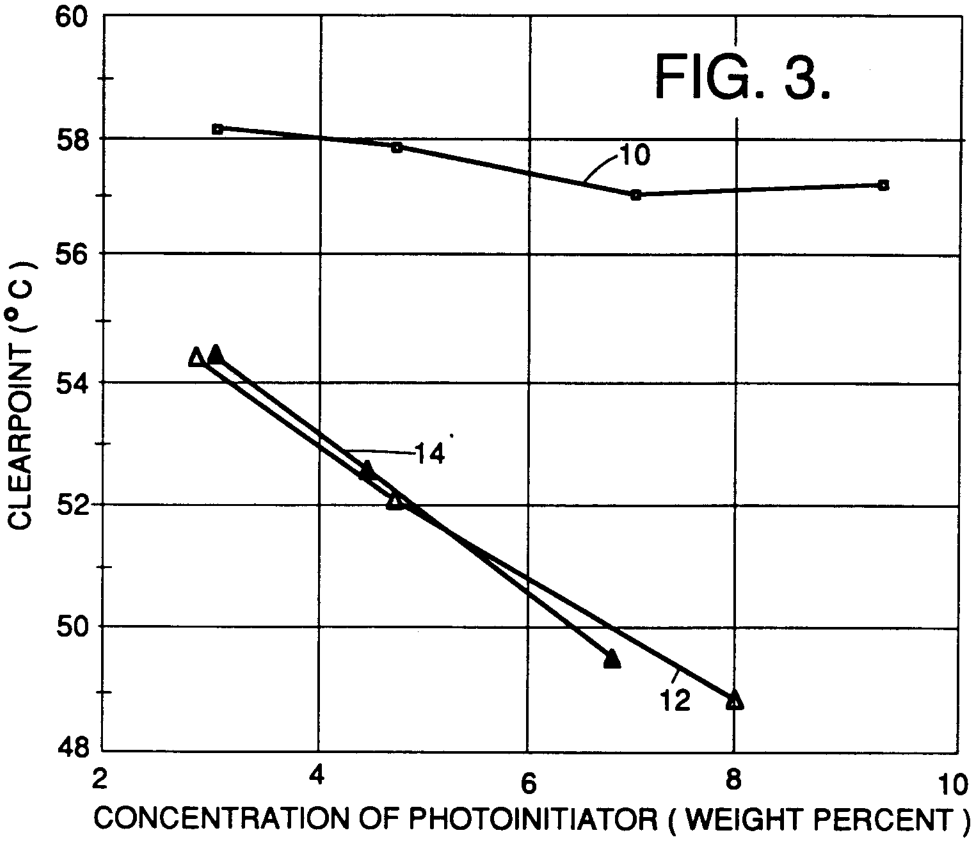
60
58
56
54
52
50
48
2
4
6
8
10
CLEARPOINT (°C)
CONCENTRATION OF PHOTOINITIATOR ( WEIGHT PERCENT )
10
14
12

FIG. 3.

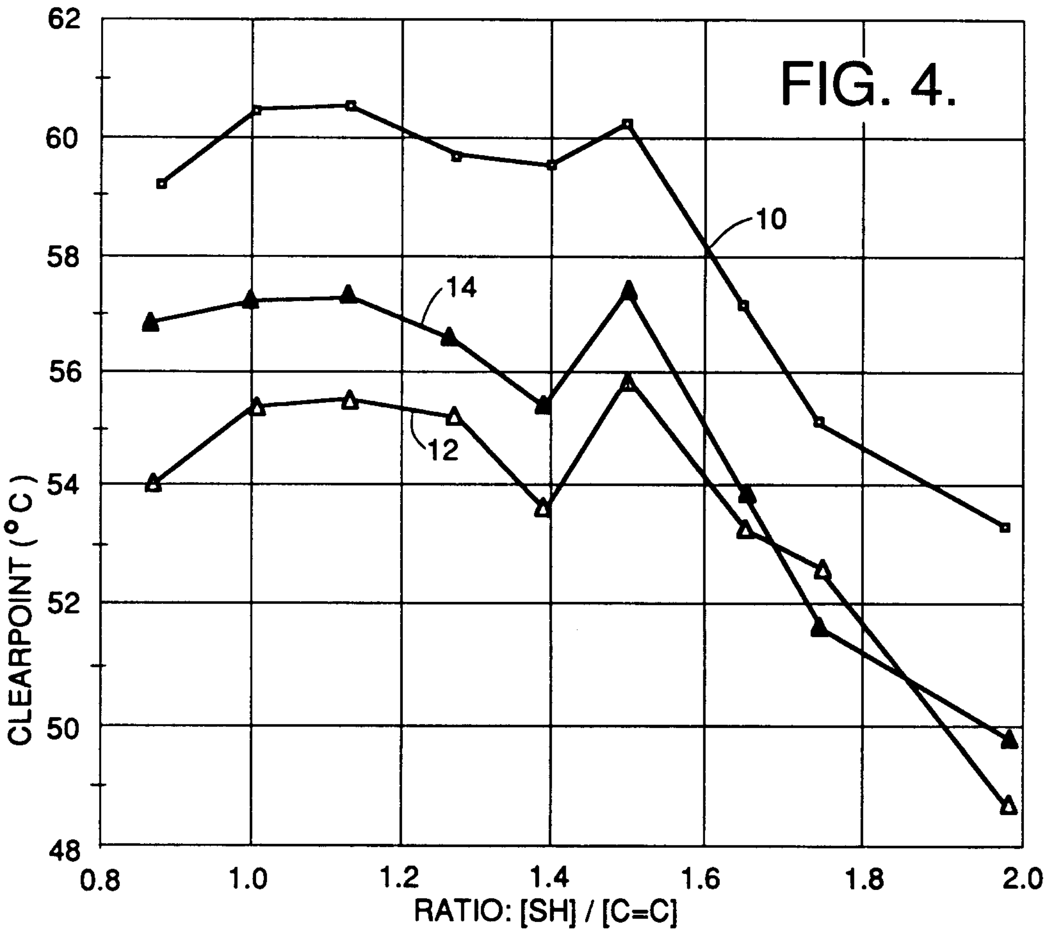
62
60
58
56
54
52
50
48
0.8
1.0
1.2
1.4
1.6
1.8
2.0
CLEARPOINT (°C)
RATIO: [SH] / [C=C]
10
14
12

FIG. 4.